# FASCICULE DE BREVET EUROPEEN

(11) **EP 3 254 551 B1**
(45) Date de publication et mention de la délivrance du brevet: **08.05.2019**
(21) Numéro de dépôt: 17174941.9
(22) Date de dépôt: 08.06.2017
(51) Int. Cl.: A01B 73/04, A01D 34/66

(54) **MACHINE DE COUPE COMPORTANT UN MÉCANISME DE DÉPLIAGE AMÉLIORÉ**
LANDWIRTSCHAFTLICHE MASCHINE MIT VERBESSERTER AUSKLAPPVORRICHTUNG
AGRICULTURAL MACHINE HAVING AN IMPROVED UNFOLDING MECHANISM

(30) Priorité: 10.06.2016 FR 1655362
(43) Date de publication de la demande: 13.12.2017
(73) Titulaire: Kuhn S.A., 67700 Saverne (FR)
(72) Inventeur: WALCH, Martin, 67490 DETTWILLER (FR); MAYEUR, Philippe, 57830 BARCHAIN (FR); WOLFF, Michel, 67670 WALTENHEIM SUR ZORN (FR)
(74) Mandataire: Esch, Esther Evelyne

(56) Documents cités:
- WO-A1-97/16957
- DE-U1- 9 112 331
- FR-A1- 2 306 616
- US-A- 5 761 890

## Description

La présente invention se rapporte aux machines agricoles portées, telles que les faucheuses ou les broyeurs d'accotement, dont le groupe d'outils se positionne au transport sensiblement verticalement.

On connaît le document FR2306616. Ce document décrit une machine de coupe pourvue d'une structure de liaison et d'un groupe de fauche monté en bout de structure de liaison via une articulation de repliage.

La structure de liaison comporte une poutre porteuse et un ensemble de transmission. Le châssis articulé est monté à l'attelage d'un tracteur.

L'ensemble de transmission présente une poulie menante et une poulie menée, ainsi qu'une courroie de transmission reliant les deux poulies.

Le document WO 97/16957 décrit également une machine de ce type.

L'invention vise à simplifier les machines agricoles ayant un groupe d'outils se positionnant verticalement au transport.

Ainsi, l'invention porte sur une machine agricole comportant :
- une structure de liaison destinée à être attelée à un tracteur, la structure de liaison comportant un support d'attelage, une poutre porteuse et un ensemble de transmission,
- l'ensemble de transmission comportant une poulie menante, une poulie menée, un organe de transmission monté à entraînement sur les poulies menante et menée, l'ensemble de transmission comportant un système de tension de l'organe de transmission,
- un groupe de travail articulé à la poutre porteuse via au moins un axe de repliage, le groupe de travail étant pourvu d'au moins un outil de travail configuré pour être entraîné en rotation depuis l'ensemble de transmission.

La machine selon l'invention est remarquable en ce que le système de tension est configuré pour appliquer une force de dépliage au groupe de travail pendant au moins une partie du déploiement du groupe de travail depuis une position de transport.

Grâce à cette caractéristique, il est possible d'exploiter la détente de l'organe de tension de l'organe de transmission ou, en d'autres termes, l'énergie utilisée pour la tension de l'organe de transmission, simultanément pour le déploiement du groupe de travail. Le système de tension forme donc, en plus, système d'assistance au dépliage et/ou système d'amorçage au dépliage du groupe de travail, même dans une position de dévers défavorable. Le dépliage est ainsi réalisé de manière simple et économique.

Avantageusement, le centre de gravité du groupe de travail se trouve dans l'espace compris entre les plans verticaux passant respectivement par l'axe de rotation de la poulie menante et l'axe de repliage lorsque la machine agricole est en une position de transport, le système de tension étant configuré pour faire franchir le plan vertical passant par l'axe de repliage par le centre de gravité du groupe de travail lors d'un dépliage de la machine depuis la position de transport. Une fois le centre de gravité franchi, le groupe de travail est en mesure de s'abaisser sous l'effet de son propre poids.

Ainsi, il est possible d'amener à faible dépense énergétique le groupe de travail dans une position où son poids propre prendra le relais pour le déployer.

Avantageusement, le système de tension est disposé dans l'espace situé entre les poulies menante et menée et/ou dans l'espace délimité par l'organe de transmission.

Ceci permet d'utiliser avantageusement l'espace intérieur à l'organe de transmission. Le système de tension est ainsi dissimulé sous le capot de l'ensemble de transmission. Le volume de la structure de liaison diminue donc par rapport à l'existant. En outre, cette configuration limite le porte-à-faux que subissent les tiges de pivot des poulies menante et menée. De plus, l'intégration du système de tension entre les poulies permet de l'utiliser pour amortir le relevage du groupe de fauche. Il n'est alors pas nécessaire de prévoir de dispositif additionnel d'amortissement du relevage du groupe de fauche.

Avantageusement, l'organe de transmission est détendu en position de transport de la machine agricole.

Ceci permet de ménager l'organe de transmission, notamment lorsqu'il s'agit d'une courroie, au transport et au remisage de la machine à l'intersaison lorsque le groupe de travail est laissé de manière durable en une position de remisage relevée analogue à la position de transport. En outre, l'intervention et le remplacement sur l'organe de transmission s'en trouvent facilités. De plus, cette caractéristique présente des avantages en termes de sécurité, la machine étant empêchée de travailler en dehors des angles de fonctionnement souhaités.

Avantageusement, l'organe de transmission est une courroie ou une chaîne.

Avantageusement, le système de tension comporte un organe de tension pouvant être un ressort de compression, un bloc de matériau élastomère et/ou élastique ou un vérin.

Avantageusement, l'axe de repliage et l'axe de rotation de la poulie menée sont distincts l'un de l'autre.

Grâce à cette caractéristique particulière, les contraintes liées à la transmission et les contraintes liées au repliage sont dissociées et réparties sur deux éléments distincts. Il est ainsi possible d'alléger certaines pièces, de limiter l'épaisseur d'empilement des composants au niveau de l'un ou l'autre de l'axe de repliage ou de l'axe de rotation de la poulie menée. Une machine plus légère est plus facile à manoeuvrer.

Avantageusement, l'axe de repliage et l'axe de rotation de la poulie menée sont confondus et la machine agricole présente un système de renvoi par levier.

Avantageusement, le système de renvoi comporte un levier, solidaire ou de corps avec un palier portant la poulie menante.

Avantageusement, le groupe de travail est un groupe de fauche ou un broyeur d'accotement.

D'autres caractéristiques et avantages de l'invention ressortiront de la description ci-après avec référence aux dessins annexés qui représentent, à titre d'exemple non limitatif, plusieurs exemples de réalisation du dispositif d'accouplement selon l'invention.

Sur ces dessins :
- la figure 1 est une vue avant d'une machine agricole en position de travail ayant un groupe de travail, ici un groupe de fauche, et une structure de liaison ;
- la figure 2 est un agrandissement de la structure de liaison telle que représentée en figure 1 ;
- la figure 3 est une vue de dessus de la machine agricole de la figure 1 ;
- la figure 4 est un agrandissement de la structure de liaison telle que représentée en figure 3 ;
- la figure 5 est une vue partielle depuis l'arrière des éléments de la figure 1, en position de travail ;
- la figure 6 est une vue des éléments de la figure 5 en position de passage d'andain ;
- la figure 7 est une vue des éléments de la figure 5 en position de transport ;
- la figure 8 est un agrandissement d'une extrémité de bielle de réglage en position ;
- la figure 9 est un exemple schématisé, en vue de dessous de l'articulation de repliage entre la structure de liaison et le groupe de travail ;
- la figure 10 montre schématiquement et en vue arrière une variante de réalisation de l'invention.

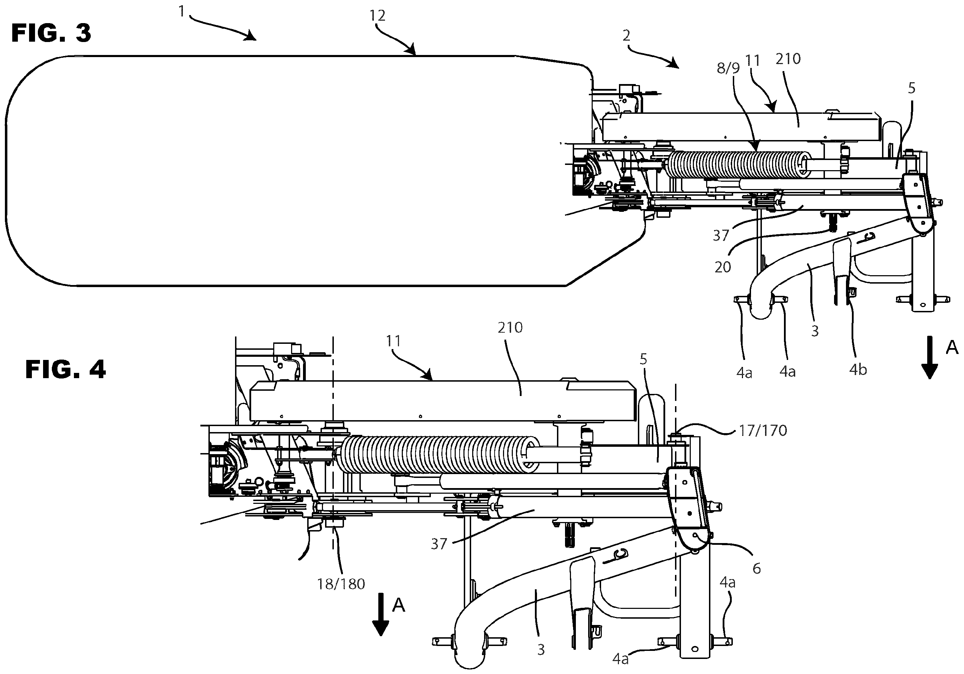

Dans la description qui suit, les notions « au-dessus », « au-dessous », « inférieure » et « supérieure » sont définies par rapport au sol, et les notions « avant », « arrière », « en aval », « gauche » et « droite » sont définies par rapport à la direction d'avancement (A) illustrée en figure 3.

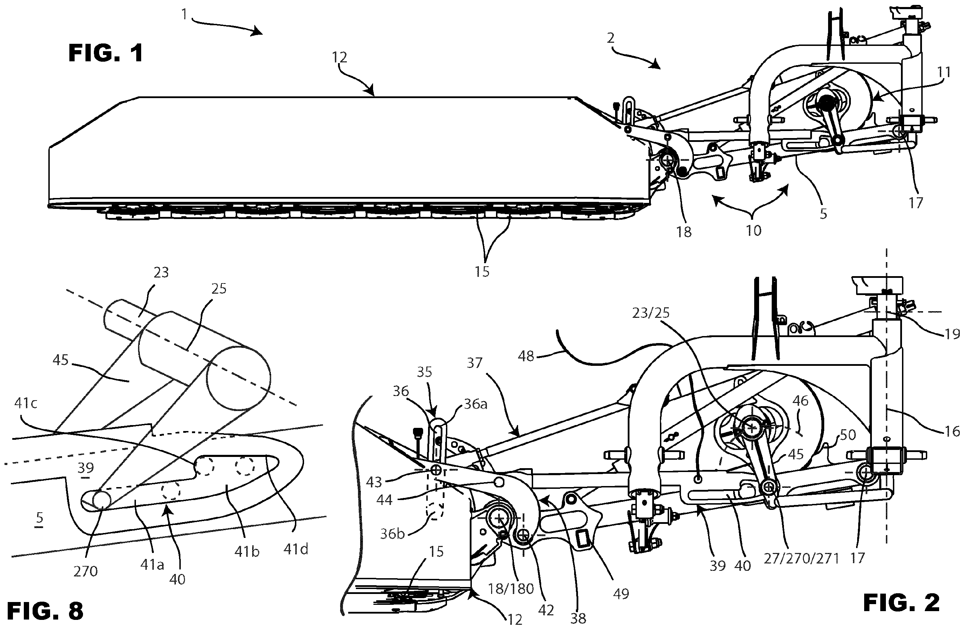

La machine agricole 1 représentée en figure 1 comporte une structure de liaison 2, un ensemble de transmission 11 et un groupe de travail 12.

La machine agricole 1 admet a minima trois positions :
- une position de travail dans laquelle le groupe de travail 12 est à proximité du sol et/ou parallèle à celui-ci,
- une position de transport dans laquelle le groupe de travail 12 est relevé à la verticale ou à quelques degrés de celle-ci pour transport sur route, préférentiellement entre 80 et 120 degrés depuis une position de travail à l'horizontale, et,
- une position intermédiaire entre les deux précédentes dans laquelle le groupe de travail 12 est décollé du sol sans être tout à fait relevé comme en position de transport.

Lorsque la machine 1 est une machine de coupe, la position intermédiaire du groupe de travail 12 est par exemple une position de passage d'andain.

La structure de liaison 2 comporte notamment un support d'attelage 3 et un étançon 5. La structure de liaison 2 comporte encore un mécanisme d'allégement 8 (figure 3) et un mécanisme de repliage 10 (figure 1).

Le support d'attelage 3 peut être monté au moyen de tourillons 4a et d'un organe d'accrochage haut 4b (figure 4) sur un attelage trois points d'un tracteur (tracteur et attelage trois points de tracteur non représentés ici). Le support d'attelage 3 se présente, par exemple, sous la forme d'une structure mécano-soudée.

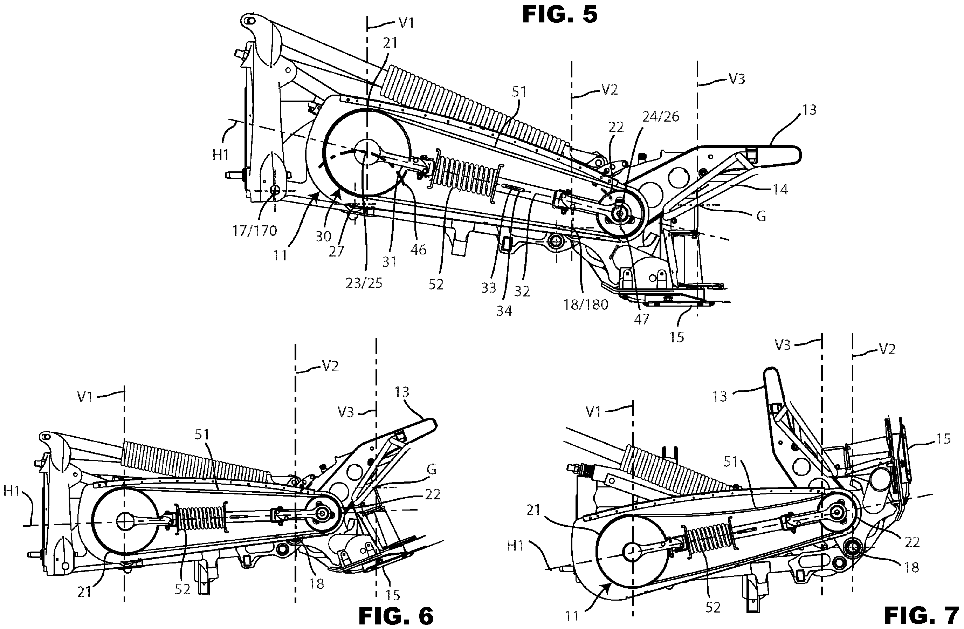

L'étançon 5, aussi appelé poutre porteuse, est lié au support d'attelage 3, préférentiellement de manière articulée ou éventuellement de manière rigide. Dans le mode de réalisation représenté, l'étançon 5 est articulé par rapport au support d'attelage 3 au moyen d'une articulation 16 d'axe sensiblement vertical, mais qui pourrait aussi être inclinée vers l'avant ou vers l'arrière. Au travail, l'étançon 5 s'étend transversalement, par exemple mais non limitativement perpendiculairement, à la direction d'avancement (A). En outre, l'étançon 5 est articulé par rapport au support d'attelage 3 par une première articulation de repliage 17 ici d'axe sensiblement horizontal 170, ou premier axe de repliage. L'axe 170 peut alternativement être incliné de quelques degrés par rapport à l'horizontale. Un limiteur non détaillé ici limite en butée la course de l'étançon 5 autour de l'axe 170 vers le haut et vers le bas. Par exemple, non limitativement, l'étançon 5 est en butée haute dans la position illustrée en figure 7.

L'étançon 5 présente une première butée 49 et une deuxième butée 50 appelée berceau 50. Les butées 49 et 50 sont d'une pièce avec le reste de l'étançon 5, par exemple soudées ou formées de corps avec celui-ci.

Le mécanisme d'allégement 8 présente notamment un élément élastique, ou élément de tension, ici un ressort de traction 9 (figures 3-4), dont les caractéristiques lui permettent de limiter les pressions au sol du groupe de travail 12, par exemple sur l'herbe dans le cas d'une machine de coupe. Le ressort 9 peut être remplacé ou complété par un vérin qui peut être autonome ou contrôlé hydrauliquement depuis le tracteur.

Le mécanisme de repliage 10 comporte un levier 35, un vérin de levage 37, une bielle boomerang 38, une bielle de réglage en position 39 (figure 2).

Le levier 35 est pourvu d'un orifice oblong 36 présentant une surface de fond 36a formant butée opposée au point d'attache 36b du levier sur la poutre intermédiaire 13 (figure 2).

La bielle boomerang 38 est une pièce recourbée montée à rotation sur l'étançon 5 par une articulation inférieure 42. La bielle 38 comporte encore une articulation supérieure 43 comportant une tige apte à coulisser dans l'orifice oblong 36.

La bielle 38 peut être relevée par pivotement autour de son articulation inférieure 42 jusqu'à venir en contact contre la butée 49.

Le vérin de levage 37 est ici un vérin simple effet. Le vérin 37 est monté côté support d'attelage sur un axe supérieur 19 grâce auquel il peut pivoter dans un plan vertical (figure 2). Le vérin 37 est encore relié à la bielle boomerang 38 par l'articulation 43. L'actionnement du vérin 37 par injection d'huile permet son raccourcissement.

Un dispositif de réglage en position qui est ici la bielle 39 est encore monté à rotation sur la bielle boomerang 38 en une articulation 44, entre les articulations inférieure 42 et supérieure 43.

La bielle 39 présente un orifice allongé 40 en forme de P (figures 2 et 8). L'orifice 40 présente un couloir 41a allongé, un vestibule 41b plus large que le couloir 41a, une surface transversale 41c et une surface supérieure 41d.

La surface 41c appartient au pourtour du vestibule 41b et est transversale au couloir 41a. Tel qu'il sera décrit plus loin, la surface 41c forme butée de passage d'andain, tandis que la surface supérieure 41d joue un rôle de profil de came.

Une commande d'actionnement 48 est reliée à la bielle 39. Dans l'exemple représenté, il s'agit d'une corde accessible depuis la cabine. Il peut encore s'agir d'un câble ou d'un système automatisé. La commande d'actionnement 48 permet lorsque nécessaire de relever la bielle 39 avant un changement de position de la machine 1.

Le dispositif de réglage en position peut prendre d'autres formes que la bielle 39, par exemple comporter une tige ayant une surface d'extrémité formant butée, un support solidaire de l'étançon 5, la tige reposant sur ce support lorsque la commande d'actionnement est au repos et coulissant sur le support lorsque le groupe de travail évolue dans un plan vertical.

Le groupe de travail 12 comporte des outils de travail 15 (figure 1). Dans l'exemple représenté sur les figures, le groupe de travail 12 est un groupe de fauche et les outils sont pourvus en particulier de lames de coupe pour la récolte de fourrage.

Le groupe de travail 12 présente ici une poutre intermédiaire 13 (figure 5) qui peut pivoter verticalement par rapport à l'étançon 5 autour d'une deuxième articulation de repliage 18, ici d'axe 180 sensiblement horizontal. La poutre intermédiaire 13 sert par exemple de point d'accroche à la barre de coupe portant les lames 15, et à une structure porteuse 14.

L'ensemble de transmission 11 est un système chargé de l'entraînement des outils du groupe de travail 12 depuis un arbre de transmission du tracteur.

L'ensemble de transmission 11 comporte une poulie menante 21 et une poulie menée 22, ainsi qu'un organe de transmission. L'organe de transmission est ici une courroie de transmission 51 reliant les deux poulies (figure 5). Alternativement, l'organe de transmission est une chaîne.

L'ensemble de transmission 11 est par ailleurs pourvu d'un système de tension 30 de l'organe de transmission comportant un organe de tension 52, une tige 31 et un fourreau 32 accueillant la tige 31 (figure 5). La tige 31 et le fourreau 32 peuvent coulisser en translation l'un par rapport à l'autre. La tige 31 et le fourreau 32 présentent en outre un système de retenue, ici respectivement un pion 33 et une rainure 34, empêchant le catapultage de la tige 31 et du fourreau 32 sous l'effet de l'organe de tension 52 lors du démontage de l'ensemble de transmission 11.

Dans l'exemple représenté aux figures 1 à 7, l'organe de tension 52 est un ressort de compression. En variante, l'organe de tension peut être différent, par exemple comporter un bloc de matériau élastomère et/ou élastique tel que le polyuréthane, un vérin qui peut être non limitativement à simple ou double effet, à ressort ou à gaz, etc.

La poulie menante 21 est entraînée par un arbre moteur 20 (figure 3), lui-même relié à une prise de force du tracteur par un arbre intermédiaire et un système de joints de Cardan (non représentés).

La poulie menée 22 transmet l'entraînement en direction du groupe de travail.

La poulie 21 est montée sur un pivot 23 qui est non seulement mobile à rotation autour de son axe propre 25 mais peut également suivre une trajectoire 46 en arc de cercle autour d'une articulation distincte 27 d'axe 271 parallèle à l'axe 25 (voir figure 2). Le pivot 23 est monté dans un palier 45 en forme de U ou d'arceau dont les extrémités sont disposées de part et d'autre de l'étançon 5. Le pivot 23 peut alors suivre une trajectoire en arc de cercle 46 centrée sur l'axe 271. Le palier 45 peut ainsi être appelé palier pivotant.

L'articulation 27 comporte une tige 270 montée sur l'étançon 5. Une extrémité de la tige 270 est logée dans l'orifice allongé 40. La surface intérieure de l'orifice 40 forme alors profil de came tandis que la tige 270 joue le rôle de suiveur. En pratique, c'est la bielle 39 qui est mobile par rapport à la tige 270. En variante non représentée, la tige 270 est substituée par un support distinct monté sur l'étançon 5.

La poulie 22 est quant à elle montée sur une tige 24 ou pivot montée mobile à rotation dans la poutre intermédiaire 13. La tige 24 est mobile à rotation autour de son axe propre 26 et peut suivre une trajectoire 47 en arc de cercle autour de la deuxième articulation de repliage 18 (voir figure 5).

L'ensemble de transmission 11 intègre préférentiellement un capot de protection 210 (figure 3).

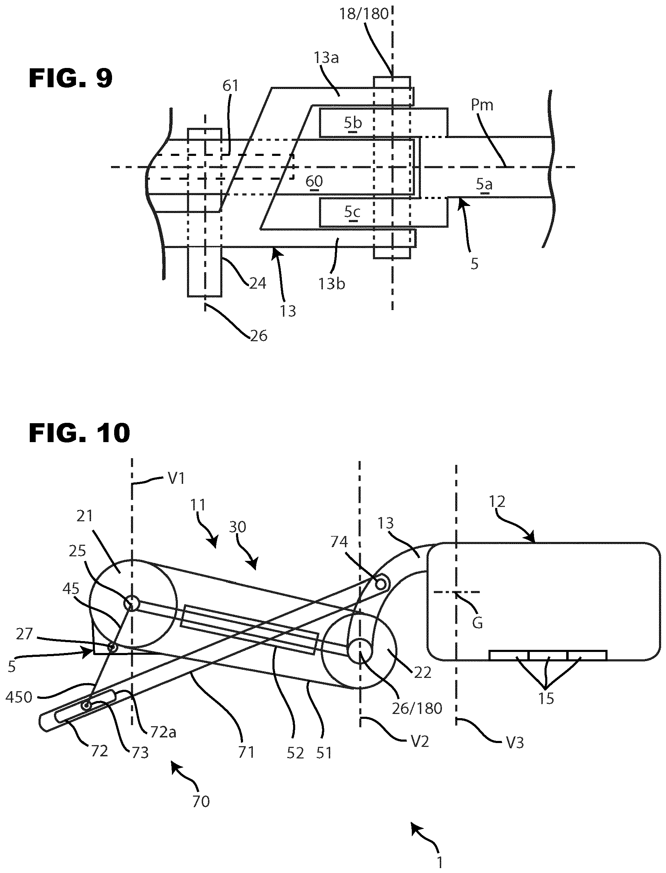

La figure 9 illustre un détail en vue de dessous d'un arrangement possible entre la poutre intermédiaire 13 et un carter 60 du groupe de travail 12, et l'étançon 5.

L'étançon 5 peut comporter une portion principale 5a à l'extrémité de laquelle deux brides 5b et 5c sont fixées.

Le carter 60 est un boîtier dans lequel une série de pignons d'entraînement 61 est logée, ceux-ci transmettant l'entraînement vers les outils 15. Dans le mode de réalisation illustré, le carter 60 est logé centré entre les brides 5b et 5c. Un seul pignon 61 est représenté en figure 9, les autres étant disposés dans le carter 60, à l'opposé de l'articulation 18.

La poutre intermédiaire 13 peut quant à elle comporter une fourche d'extrémité pourvue de branches 13a et 13b.

Ici, préférentiellement mais non limitativement, le carter 60 peut être en matériau léger tel que l'aluminium, tandis que l'étançon 5 et la poutre intermédiaire 13 sont en acier.

L'assemblage de la poutre 13, du carter 60 et de l'étançon 5 peut se faire de la manière suivante :
- l'une des brides 5b et 5c est fixée à la portion principale 5a, par exemple par vissage ou par soudage ;
- le carter 60 est disposé contre la bride 5b ou 5c qui vient d'être fixée à la portion 5a ;
- l'autre bride 5b ou 5c est fixée contre la portion 5a, par exemple par vissage, le carter 60 étant alors pris en sandwich entre les brides 5b et 5c ;
- la poutre intermédiaire 13 est disposée autour de l'extrémité de l'étançon 5 avec les branches 13a et 13b de part et d'autre des brides 5b et 5c ;
- la tige de l'articulation 18 est insérée dans les orifices alignés des pièces 5, 13 et 60 pour articuler la poutre 13 et le carter 60 par rapport à l'étançon 5.

La tige 24 peut avoir été montée dans le carter 60 au préalable en même temps que la série de pignons 61. Le reste de l'ensemble de transmission 11 peut alors être mis en place contre l'étançon 5.

La machine 1 décrite ci-dessus présente plusieurs avantages par rapport à l'art antérieur. La dissociation des fonctions repliage (articulation 18) et entraînement (tige 24) permet de répartir sur deux tiges distinctes (l'axe de l'articulation 18 et la tige 24) les contraintes qui s'exerçaient auparavant sur une articulation unique. Grâce à des contraintes moindres, il est possible d'alléger certaines pièces, par exemple en fabriquant le carter 60 en aluminium. Il en résulte un gain de plusieurs dizaines de kilogrammes. En montant la poulie menée 22 sur une tige 24 distincte de l'articulation 18, il est possible de rapprocher la poulie 22 du centre de gravité de la machine 1, par lequel passe par exemple un plan longitudinal Pm (figure 9). Les contraintes de flexion (c'est-à-dire le porte-à-faux ou le bras de levier) subies par le pivot de la poulie 22, et les contraintes de torsion subies par l'étançon 5 sont ainsi réduites. En outre, il est possible de réduire le nombre de pièces empilées en largeur et la largeur de celles-ci et donc d'alléger encore la machine 1.

Trois plans verticaux V1, V2 et V3 sont définis pour décrire la machine agricole 1 (voir figure 5).

Le plan vertical V1 passe par l'axe de rotation de la poulie menante 25.

Le plan vertical V2 passe par le deuxième axe de repliage 180.

Le plan vertical V3 passe le centre de gravité G du groupe de travail 12 (figures 5 et 7).

La qualification de « vertical » des plans V1, V2 et V3 s'entend par rapport à un sol plan horizontal.

Dans le mode de réalisation représenté en figures 5 à 7 :
- dans la position de travail et dans la position intermédiaire, le plan vertical V3 se situe hors de l'espace entre les plans V1 et V2 ;
- dans la position de transport, le plan vertical V3 se situe dans l'espace entre les plans V1 et V2.

Pour passer de la position de travail (figure 5) à la position de passage d'andain (figure 6) ou à la position de transport (figure 7), le vérin 37 est actionné.

Au travail, le groupe de travail 12 est abaissé, et repose par exemple sur le sol dans le cas d'une faucheuse à lames. Le groupe de travail 12 et la structure de liaison 2 sont susceptibles de subir un débattement pour suivre le profil du terrain sur la longueur du groupe de fauche. Le groupe de travail 12 évolue alors en rotation autour des axes de repliage 170 et 180. Lors de ce débattement, l'articulation 43 coulisse dans l'orifice oblong 36 du levier 35 (figure 2).

On décrit ci-après le passage de la position de travail à la position intermédiaire.

L'actionnement du vérin 37 permet dans une première étape de rattraper le jeu dû au débattement et qui subsiste entre la structure de liaison 2 et le groupe de travail 12. La rétractation du vérin 37 provoque le pivotement de la bielle boomerang 38 autour de l'articulation 42, et le pivotement du levier 35 autour de son point d'attache 36b. L'articulation 43 vient en contact contre la butée 36a.

Par son poids propre, la bielle de réglage en position 39 repose normalement sur la tige 270 en position de travail et en position intermédiaire. Le pivotement de la bielle 38 fait donc coulisser la bielle 39 par rapport à la tige 270.

Au cours d'une deuxième étape, alors que l'articulation 43 se trouve contre la butée 36a, la bielle 38 continue de pivoter autour de l'articulation 42 tandis que le groupe de travail 12 pivote autour de l'axe de repliage 180, entraîné par le levier 35. En fin de deuxième étape, la tige 270 vient en contact contre la butée 41c. Le pivotement du groupe de travail 12 autour de l'articulation 18 est alors interrompu.

La rétractation du vérin 37 se poursuit au cours d'une troisième étape au cours de laquelle le groupe de travail 12 et l'étançon 5 pivotent autour du premier axe de repliage 170. Ce mouvement est interrompu par une butée mécanique qui désactive l'alimentation en huile du vérin 37 en y maintenant la pression hydraulique. La machine 1 se trouve alors en position de passage d'andain (figure 6).

On décrit à présent le passage de la position de travail à la position de transport.

Le passage en position de transport se fait par exemple en actionnant la commande 48 qui soulève la bielle 39. L'actionnement de la commande 48 peut généralement intervenir à tout moment en début de course de vérin 37, avant que la surface 41c ne vienne en contact contre la tige 270. L'étape éventuelle de rattrapage de jeu est identique sur le principe à celle décrite précédemment.

Au cours d'une deuxième étape, la rétractation du vérin 37 permet à la bielle 38 de continuer de pivoter autour de l'articulation 42. Le soulèvement de la bielle 39 permet à la tige 270 de s'engager dans le couloir 41a en évitant la surface 41c. La bielle 39 peut alors continuer à coulisser par rapport à la tige 270, au-delà de la surface de butée 41c. Faute pour la surface 41c d'être arrêtée par la tige 270, le groupe de travail 12 continue de pivoter autour de l'axe de repliage 180 jusqu'à une position sensiblement verticale, préférentiellement au-delà du plan vertical V2 passant par l'axe de repliage 180.

Au cours du relevage, les pivots 23 et 24 sont amenés à se déplacer autour de l'articulation respective 27 et 18. Le pivot 23 suit alors la trajectoire en arc de cercle 46 et le pivot 24 la trajectoire 47 (figure 5). Le pivot 23 vient en butée contre le berceau 50 (figure 2). Le vérin 37 continue à se rétracter alors que la tige du pivot 23 se maintient en butée. La course du pivot 24 se poursuit tandis que la courroie 51 se détend. Le système de tension 30 et son ressort de compression 52 se compriment alors. La course du pivot 24 est interrompue lorsque la bielle boomerang 38 vient en contact contre la butée 49 et que la poutre intermédiaire 13 ne peut plus pivoter autour de l'axe de repliage 180. L'étançon 5 pivote alors autour de l'axe 170. Le groupe de travail 12 a alors atteint la position de transport et l'organe de transmission 51 est détendu (figure 7). Pour bloquer la machine en position de transport, il convient ici de bloquer le vérin 37 pour l'empêcher de se déployer. Un verrou est alors mis en oeuvre. Le verrou prend par exemple la forme d'un crochet monté sur le corps du vérin 37 et que l'on engage contre un pion solidaire de la tige de vérin, par exemple sur la chape d'extrémité du vérin.

Pour faire redescendre le groupe de travail 12 depuis la position de transport, il suffit de désengager le verrou et d'ouvrir le circuit d'huile du vérin 37. L'huile peut alors s'échapper du vérin 37 et le vérin peut s'allonger.

Dans le mode de réalisation représenté, l'étançon 5 s'abaisse en pivotant autour de l'axe de repliage 170. Le limiteur arrête le mouvement de l'étançon 5 vers le bas.

L'énergie du ressort 52 comprimé repousse le centre de gravité G du groupe de travail 12 (ou le plan V3) au-delà du plan vertical V2. Le ressort 52 assiste donc le groupe de travail 12 dans son déplacement depuis la position de transport vers sa position de travail. L'organe de tension 52 forme donc avantageusement organe d'aide au dépliage en plus de son rôle d'organe de tension à proprement parler. Une fois le groupe de travail 12 au-delà du plan vertical V2, son poids propre le fait descendre jusqu'à la position de travail.

Le diamètre d'échappement de l'huile du vérin 37 est choisi pour réguler automatiquement la descente du groupe de travail 12 sous l'action du poids propre du groupe de travail 12.

Dans un mode de réalisation alternatif illustré schématiquement en figure 10, la machine agricole 1 présente un système de renvoi par levier 70. La poulie menée 22 est ici montée à rotation autour de l'axe de repliage 180. Les axes de rotation de la poulie menée 22 et du groupe de travail 12 par rapport à la structure de liaison 2 sont donc confondus.

Le système de renvoi 70 comporte ici une bielle 71, un levier 450 et un suiveur 73.

La bielle 71 est montée en une première extrémité par une articulation 74 sur la poutre intermédiaire 13 du groupe de travail 12. La bielle 71 est pourvue d'un orifice oblong 72, ici disposé longitudinalement en une deuxième extrémité, opposée à la première extrémité. L'orifice oblong 72 présente une surface d'extrémité 72a formant butée, du côté le plus proche de l'articulation 74.

Le levier 450 comporte au moins une branche montée à rotation sur l'articulation 27. Le levier 450 pivote donc sur la même articulation que le palier 45. La branche du levier 450 est solidaire d'une des branches du palier 45 en U. Alternativement, la branche du levier 450 est de corps avec l'une des branches du palier 45. Alternativement encore, le levier peut comporter une deuxième branche qui peut être solidaire ou de corps avec la deuxième branche du palier 45.

Le suiveur 73 peut prendre la forme d'une tige de pivot et/ou d'un galet. Le suiveur 73 est monté dans l'orifice 72. La section du suiveur 73 est adaptée pour maintenir le suiveur 73 dans l'orifice 72, mobile à translation. Le levier 450 est en outre monté à rotation sur le suiveur 73.

Au passage en position de transport, la rétractation du vérin 37 fait se déplacer la bielle 71 par rapport au suiveur 73. La surface 72a vient alors en contact avec le suiveur 73 suite à quoi la bielle 71 pousse le levier 450. Le levier 450 et le palier 45 pivotent autour de l'articulation 27, ce qui provoque la rétractation de l'organe de tension 52 qui accumule alors de l'énergie élastique, tandis que l'organe de transmission 51 se détend. Pendant ce temps, le groupe de travail 12 a été relevé de sorte que son centre de gravité franchisse le plan V2 pour se retrouver dans l'espace situé entre les plans V1 et V2 en position de transport.

Au dépliage du groupe de travail 12 depuis la position de transport, le vérin 37 est déverrouillé et son circuit d'huile ouvert. L'organe de tension 52 restitue alors son énergie en repoussant le palier 45, ce qui retend l'organe de transmission 51. Le palier 45 et le levier 450 pivotent autour de l'articulation 27. Le suiveur 73 repousse la surface 72a, ce qui a pour effet de favoriser le passage du centre de gravité G au-delà du plan V2, en dehors de l'espace situé entre les plans V1 et V2. Le groupe de travail 12 achève de descendre sous son propre poids.

En variantes non illustrées, l'organe de tension 52 est disposé hors de l'espace délimité par l'organe de transmission 51, par exemple dans le plan H1 contenant les axes de rotation 25 et 26 des poulies 21 et 22 ou encore sur la bielle 71 de manière à repousser le suiveur 73 vers l'articulation 74 en position de travail.

Il est bien évident que l'invention n'est pas limitée aux variantes de réalisation décrites ci-dessus et représentées sur les figures annexées. Des modifications restent possibles, notamment en ce qui concerne la constitution ou le nombre des divers éléments ou par substitution d'équivalents techniques, sans pour autant sortir du domaine de protection.

Le système de tension 30 peut comporter un galet additionnel pour tendre l'organe de transmission.

La structure de liaison telle que décrite ci-dessus peut également être mise en oeuvre dans d'autres types de machines agricoles telles que par exemple les faucheuses à tambour ou les broyeurs d'accotement, auquel cas, le groupe de travail comporte des outils différents des lames de coupe du groupe de fauche décrit précédemment. Les outils de broyeurs peuvent par exemple être des dents montées sur un tambour d'axe transversal à la direction d'avance A de la machine et être individuellement montées sur des axes parallèles à l'axe général du tambour.

En outre, la machine peut comporter différents organes et articulations pour le suivi de terrain et l'évitement d'obstacle (non représentés ici).

## Revendications

1. Machine agricole comportant :
- une structure de liaison (2) destinée à être attelée à un tracteur, la structure de liaison (2) comportant un support d'attelage (3), une poutre porteuse (5) et un ensemble de transmission (11),
- l'ensemble de transmission (11) comportant une poulie menante (21), une poulie menée (22), un organe de transmission (51) monté à entraînement sur les poulies menante et menée, l'ensemble de transmission (11) comportant un système de tension (30) de l'organe de transmission (51),
- un groupe de travail (12) articulé à la poutre porteuse (5) via au moins un axe de repliage (180), le groupe de travail (12) étant pourvu d'au moins un outil de travail (15) configuré pour être entraîné en rotation depuis l'ensemble de transmission (11),
***caractérisé en ce que*** le système de tension (30) applique une force de dépliage au groupe de travail (12) pendant au moins une partie du déploiement du groupe de travail (12) depuis une position de transport.

2. Machine agricole selon la revendication précédente, le centre de gravité (G) du groupe de travail (12) se trouvant dans l'espace compris entre les plans verticaux (V1, V2) passant respectivement par l'axe de rotation (25) de la poulie menante (21) et l'axe de repliage (180) lorsque la machine agricole est en une position de transport, le système de tension (30) étant configuré pour faire franchir le plan vertical (V2) par le centre de gravité (G) du groupe de travail (12) lors d'un dépliage de la machine depuis la position de transport.

3. Machine agricole selon l'une des revendications précédentes, le système de tension (30) étant disposé dans l'espace situé entre les poulies menante (21) et menée (22) et/ou dans l'espace délimité par l'organe de transmission (51).

4. Machine agricole selon l'une des revendications précédentes, l'organe de transmission (51) étant détendu en position de transport de la machine agricole.

5. Machine agricole selon l'une des revendications précédentes, l'organe de transmission (51) étant une courroie ou une chaîne.

6. Machine agricole selon l'une des revendications précédentes, le système de tension (30) comportant un organe de tension (52) pouvant être un ressort de compression, un bloc de matériau élastomère et/ou élastique ou un vérin.

7. Machine agricole selon l'une des revendications précédentes, l'axe de repliage (180) et l'axe de rotation (26) de la poulie menée étant distincts l'un de l'autre.

8. Machine agricole selon l'une des revendications 1 à 7, l'axe de repliage (180) et l'axe de rotation (26) de la poulie menée étant confondus et la machine agricole présente un système de renvoi par levier (70).

9. Machine agricole selon la revendication précédente, le système de renvoi (70) comporte un levier (450), solidaire ou de corps avec un palier (45) portant la poulie menante (21).

10. Machine agricole selon l'une des revendications précédentes, le groupe de travail étant un groupe de fauche ou un broyeur d'accotement.

## Patentansprüche

1. Landwirtschaftliche Maschine mit
- einer Verbindungsvorrichtung (2), die dazu bestimmt ist, an einen Schlepper gekuppelt zu werden, wobei die Verbindungsvorrichtung (2) eine Kupplungsauflage (3), einen Tragbalken (5) und eine Übertragungseinheit (11) umfasst,
- der Übertragungseinheit (11) mit einer Antriebsscheibe (21), einer angetriebenen Scheibe (22), einem Übertragungselement (51), das antreibbar auf der Antriebsscheibe und der angetriebenen Scheibe angebracht ist, wobei die Übertragungseinheit (11) ein Spannungssystem (30) für das Übertragungselement (51) umfasst,
- einer Arbeitseinheit (12), die an dem Tragbalken (5) über mindestens eine Zusammenklappachse (180) angelenkt ist, wobei die Arbeitseinheit (12) mit mindestens einem Arbeitswerkzeug (15) ausgestattet ist, das ausgestaltet ist, ausgehend von der Übertragungseinheit (11) in Drehung versetzt zu werden,
***dadurch gekennzeichnet,* dass** das Spannungssystem (30) eine Ausklappkraft auf die Arbeitseinheit (12) während mindestens eines Teils der Entfaltung der Arbeitseinheit (12) ausgehend von einer Transportposition ausübt.

2. Landwirtschaftliche Maschine nach dem vorhergehenden Anspruch, wobei der Schwerpunkt (G) der Arbeitseinheit (12) in dem Raum zwischen den Vertikalebenen (V1, V2) liegt, die jeweils durch die Schwenkachse (25) der Antriebsscheibe (21) und die Zusammenklappachse (180) verlaufen, wenn sich die landwirtschaftliche Maschine in einer Transportposition befindet, wobei das Spannungssystem (30) ausgestaltet ist, die Vertikalebene (V2) den Schwerpunkt (G) der Arbeitseinheit (12) bei einem Ausklappen der Maschine ausgehend von der Transportposition überqueren zu lassen.

3. Landwirtschaftliche Maschine nach einem der vorhergehenden Ansprüche, wobei das Spannungssystem (30) in dem Raum angeordnet ist, der sich zwischen der Antriebsscheibe (21) und der angetriebenen Scheibe (22) befindet, und/oder in dem Raum, der von dem Übertragungselement (51) begrenzt wird.

4. Landwirtschaftliche Maschine nach einem der vorhergehenden Ansprüche, wobei das Übertragungselement (51) in der Transportstellung der landwirtschaftlichen Maschine entspannt ist.

5. Landwirtschaftliche Maschine nach einem der vorhergehenden Ansprüche, wobei das Übertragungselement (51) ein Riemen oder eine Kette ist.

6. Landwirtschaftliche Maschine nach einem der vorhergehenden Ansprüche, wobei das Spannungssystem (30) ein Spannungsorgan (52) umfasst, welches eine Druckfeder, ein Elaststoffblock und/oder ein Gummiblock oder ein Zylinder sein kann.

7. Landwirtschaftliche Maschine nach einem der vorhergehenden Ansprüche, wobei die Zusammenklappachse (180) und die Schwenkachse (26) der angetriebenen Scheibe voneinander verschieden sind.

8. Landwirtschaftliche Maschine nach einem der Ansprüche 1 bis 7, wobei die Zusammenklappachse (180) und die Schwenkachse (26) der angetriebenen Scheibe zusammenfallen und die landwirtschaftliche Maschine ein Hebelsystem (70) aufweist.

9. Landwirtschaftliche Maschine nach dem vorhergehenden Anspruch, wobei das Hebelsystem (70) einen Hebel (450) umfasst, der mit einem Lager (45), das die Antriebsscheibe (21) trägt, fest verbunden oder aus einem Körper ist.

10. Landwirtschaftliche Maschine nach einem der vorhergehenden Ansprüche, wobei die Arbeitseinheit eine Mäheinheit oder ein Böschungsmäher ist.

## Claims

1. Agricultural machine including:
- a connecting structure (2) designed to be hitched to a tractor, the connecting structure (2) including a coupling support (3), a carrier beam (5) and a transmission unit (11),
- the transmission unit (11) including a driving pulley (21), a driven pulley (22), a transmission element (51) drive-mounted on the driving and driven pulleys, the transmission unit (11) including a transmission element (51) tensioning system (30),
- a work unit (12) articulated to the carrier beam (5) via at least one folding axis (180), the work unit (12) being fitted with at least one work tool (15) configured to be driven in rotation from the transmission unit (11),
***characterized in* that** the tensioning system (30) applies an unfolding force to the work unit (12) during at least one part of the deployment of the work unit (12) from a transport position.

2. Agricultural machine according to the preceding claim, the centre of gravity (G) of the work unit (12) being located in the space between the vertical planes (V1, V2) passing respectively through the rotation axis (25) of the driving pulley (21) and the folding axis (180) when the agricultural machine is in a transport position, the tensioning system (30) being configured to allow the vertical plane (V2) to go across the centre of gravity (G) of the work unit (12) when unfolding the machine from the transport position.

3. Agricultural machine according to one of the preceding claims, the tensioning system (30) being positioned in the space between the driving (21) and driven (22) pulleys and/or in the space defined by the transmission element (51).

4. Agricultural machine according to one of the preceding claims, the transmission element (51) being slackened in the transport position of the agricultural machine.

5. Agricultural machine according to one of the preceding claims, the transmission element (51) being a belt or a chain.

6. Agricultural machine according to one of the preceding claims, the tensioning system (30) including a tensioning element (52) that can be a compression spring, an elastomeric material and/or elastic pad and/or a cylinder.

7. Agricultural machine according to one of the preceding claims, the folding axis and the rotation axis (180) of the driven pulley being separate from each other.

8. Agricultural machine according to one of the claims 1 to 7, the folding axis (180) and the rotation axis (26) of the driven pulley being coincident and the agricultural machine having a lever system (70).

9. Agricultural machine according to the preceding claim, the lever system (70) including a lever (450), rigidly fastened or joined to a bearing (45) supporting the driving pulley (21).

10. Agricultural machine according to one of the preceding claims, the work unit being a mower unit or a roadside shredder.
